# EUROPEAN PATENT APPLICATION

(11) **EP 4 679 382 A1**
(43) Date of publication of application: **14.01.2026**
(21) Application number: 25188719.6
(22) Date of filing: 10.07.2025
(51) Int. Cl.: G06V 10/764, G06V 10/82, G06V 20/13, G06V 20/10

(54) **SYSTEM AND METHOD FOR SPACE BASED HYPERSPECTRAL IMAGING AND ONBOARD PROCESSING FOR RESIDENT SPACE OBJECT CHARACTERIZATION**

(30) Priority: 10.07.2024 US 202463666882 P
(71) Applicant: MDA Systems Ltd., Richmond, BC V6V 2J3 (CA)
(72) Inventor: Kumar, Balaji Shankar, Richmond, British Columbia, V6V 2J3 (CA); Lim, Jerry, Richmond, British Columbia, V6V 2J3 (CA); Jones, Ray, Richmond, British Columbia, V6V 2J3 (CA); Koulas, Christos, Richmond, British Columbia, V6V 2J3 (CA)
(74) Representative: Grünecker Patent- und Rechtsanwälte PartG mbB

(57) **Abstract**

Systems and methods for characterizing resident space objects (RSOs) including collecting hyperspectral data of an RSO using a hyperspectral imaging sensor onboard a spacecraft, processing the data using an ML RSO classification and identification model to obtain RSO and component spectra identification data, transmitting the identification data and the hyperspectral data to a ground station, processing the hyperspectral data at the ground station using an image processing algorithm or technique other than the ML-based RSO classification and identification model to obtain enriched RSO and component spectra identification data, optimizing identification of the RSO and spectra in the hyperspectral data using an output of a comparison of identification data and the enriched identification data to obtain optimized identification data; transmitting the optimized RSO and component spectra identification data to a user device; and displaying the optimized RSO and component spectra identification data in a graphical user interface at the user device.

## Description

### Technical Field

The following relates generally to space situational awareness and hyperspectral imaging, and more particularly to systems and methods for space based hyperspectral imaging and onboard processing for resident space object (RSO) characterization.

### Introduction

Hyperspectral imaging (HSI) of resident space objects ("RSOs") for space situational awareness is a powerful defense technology capable of providing intelligence on spacecraft physical properties. However, its use in space is challenging because the resultant hypercube data that the HSI sensors produce creates data downlink bottlenecks.

Accordingly, there is a need for an improved system and method for RSO characterization that overcomes at least some of the disadvantages of existing systems and methods.

### Summary

A method of characterizing resident space objects (RSOs) for space situational awareness using hyperspectral imaging is provided. The method includes collecting hyperspectral data of an RSO using a hyperspectral imaging sensor onboard a spacecraft while in space, processing the hyperspectral data using a machine learning-based RSO classification and identification model running on a processing unit onboard the spacecraft to obtain RSO and component spectra identification data, transmitting the RSO and component spectra identification data from the spacecraft to a ground station, transmitting the measured hyperspectral data of the RSO from the spacecraft to the ground station, processing the measured hyperspectral data of the RSO by a processing unit at the ground station using an image processing algorithm or technique trained from past HSI collections, other sensors, and patterns of life of the other sensors including sensor fusion to obtain enriched RSO and component spectra identification data, optimizing identification of the RSO and component spectra in the measured hyperspectral data using an output of a comparison of the RSO and component spectra identification data and the enriched RSO and component spectra identification data to obtain optimized RSO and component spectra identification data, thereby identifying discrepancies and areas of improvement for parameter adjustment and estimates, transmitting the optimized RSO and component spectra identification data to a user device, and displaying the optimized RSO and component spectra identification data in a graphical user interface at the user device.

The method may further include performing, before measuring the hyperspectral data of the RSO, storing calibration hyperspectral data of reference stars on a data storage device onboard the spacecraft, collecting hyperspectral data of the reference stars using the hyperspectral imaging sensor while in space, comparing the collected hyperspectral data of the reference stars to the calibration hyperspectral data of the reference stars using the processing unit onboard the spacecraft to obtain corrections data, and correcting a spectral response of the hyperspectral imaging sensor based on the corrections data.

The method may further include reducing and compressing the collected hyperspectral data of the RSO prior to transmitting to the ground station and decompressing the compressed collected hyperspectral data of the RSO prior to processing by the processing unit at the ground station.

The calibration hyperspectral data may include a catalogue or database of stars of a priori known spectral characteristics stored on a data storage device in communication with the processing unit onboard the spacecraft.

Comparing the collected hyperspectral data of the reference stars to the calibration hyperspectral data of the reference stars may include comparing measured dark field and reference star spectra with the a priori known dark field and reference star spectra, computing gain and offset values for each spectral band using the output of the comparison, and applying the gain and offset values to measured RSO spectral bands to effect corrections.

The computing may be done using the Empirical Line Method.

The corrections data may include correction for solar irradiance to compensate for known variation in illumination of the RSO as a function of wavelength, and correction for instrument response to compensate for differences in detector sensitivity as a function of wavelength.

Application of the corrections data may compensate for other factors such that the corrected hyperspectral data may more clearly show impact of reflectance of materials making up the RSO.

The component spectra may include spectra of individual materials making up the RSO.

The component spectra may include an individual abundance of each type of material in the RSO and may act as a fingerprint for the RSO.

The RSO spectrum may equal a sum of abundance weighted individual spectra of the individual materials.

The RSO may not be a known RSO target, the hyperspectral imaging sensor may be commanded to collect the hyperspectral data around a pointing angle, the RSO may be present in the resulting field of view of the hyperspectral imaging sensor, and the command may be received based on a task list from the ground station or cued by an on-board wide field-of-view sensor or by cooperative satellite constellations in proximity.

The RSO may be a known RSO target, and the method may further include extracting information on an orbit of the known RSO target from a locally maintained database stored on a data storage device onboard the spacecraft, calculating a pointing angle from altitudes and positions of the spacecraft and the known RSO target, and commanding the hyperspectral imaging sensor to collect the hyperspectral data around the pointing angle.

A system may be provided for implementing any of the foregoing methods.

A system is provided for characterizing resident space objects (RSOs) for space situational awareness using hyperspectral imaging. The system includes a hyperspectral imaging sensor onboard a spacecraft for collecting hyperspectral data of an RSO while in space, a processing unit onboard the spacecraft, configured to process the hyperspectral data using a machine learning-based RSO classification and identification model to obtain RSO and component spectra identification data, a communication system onboard the spacecraft, configured to transmit the RSO and component spectra identification data from the spacecraft to a ground station, transmit the measured hyperspectral data of the RSO from the spacecraft to the ground station, the ground station, including a processing unit configured to process the measured hyperspectral data of the RSO using an image processing algorithm or technique trained from past HSI collections, other sensors, and patterns of life of the other sensors including sensor fusion to obtain enriched RSO and component spectra identification data, optimize identification of the RSO and component spectra in the measured hyperspectral data using an output of a comparison of the RSO and component spectra identification data and the enriched RSO and component spectra identification data to obtain optimized RSO and component spectra identification data, thereby identifying discrepancies and areas of improvement for parameter adjustment and estimates, a communication interface configured to transmit the optimized RSO and component spectra identification data to a user device, and the user device, configured to display the optimized RSO and component spectra identification data in a graphical user interface.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a system for resident space object characterization, according to an embodiment;
Figure 2 is a block diagram of components of the system of Figure 1 in further detail, according to an embodiment;
Figure 3 is a flowchart of a method of resident space object characterization, according to an embodiment;
Figure 4 is a block diagram of a space segment computer system for characterizing RSOs in hyperspectral data, according to an embodiment; and
Figure 5 is a block diagram of a ground segment computer system for characterizing RSOs in hyperspectral data, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to space situational awareness and hyperspectral imaging, and more particularly to systems and methods for space based hyperspectral imaging and onboard processing for resident space object (RSO) characterization.

By combining onboard ML with ground base ML, an optimal approach is provided for a robust and accurate RSO identification system that leverages the strength of both approaches.

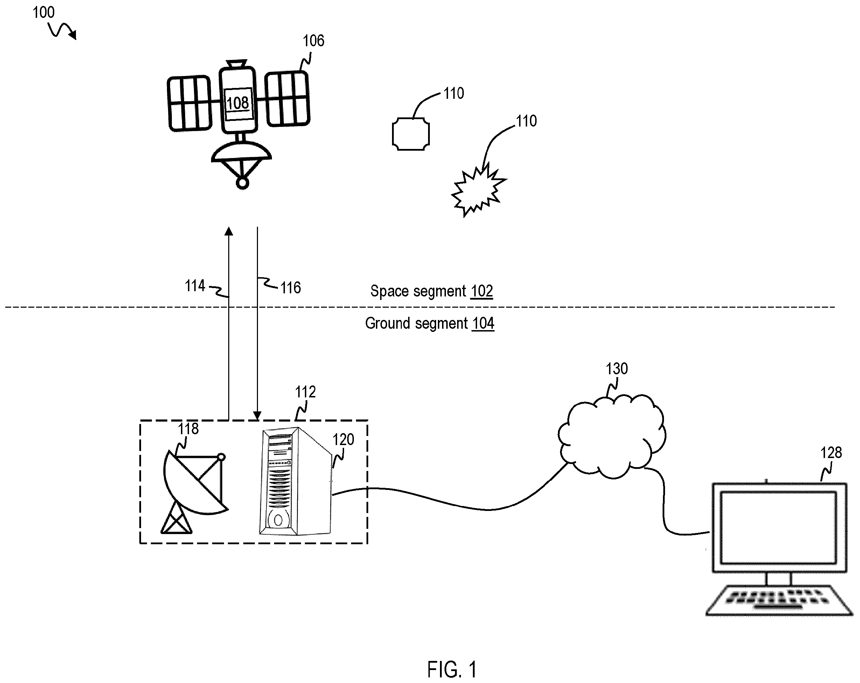

Referring now to Figure 1, shown therein is a system 100 for resident space object characterization, according to an embodiment.

The system 100 includes a space segment 102 and a ground segment 104.

The space segment 102 includes a spacecraft 106. The spacecraft 106 collects hyperspectral image data of the environment using one or more onboard hyperspectral imaging sensors. The hyperspectral image data is processed by the system 100 to characterize resident space objects (RSOs).

The spacecraft 106 or a component thereof (e.g., an optical sensor) may advantageously have a wide field of view to cue the hyperspectral imaging sensors as to the correct or best coordinates or direction(s) to search for the RSOs, thereby saving coordination and communication with the ground segment. Such an optical sensor may be on a cluster of satellites in close proximity to a hyperspectral satellite sensor. Such an optical sensor may be on-board with the hyperspectral sensor.

The spacecraft 106 also includes an onboard processing unit 108. The onboard processing unit 108 executes an RSO characterization software application. The RSO characterization application is configured to receive the collected hyperspectral image data ("measured spectra") as input and process the hyperspectral image data using machine learning ("ML") techniques to detect, track, classify, and identify RSOs in the hyperspectral image data. Generally, the processing by the OBP unit 108 reduces the amount of data that is downlinked to ground.

The plurality of satellite data sources 106 communicate with a ground station 112 (or ground terminal) via an uplink 114 and downlink 116. The manner of communication is generally known. In other embodiments, there may be a plurality of ground stations 112 and the number of ground stations 112 is not particularly limited. The ground stations may be located in multiple geographic locations. There may be single or multiple ground sensor sources that augment the accuracy of classification and identification modules of the ground stations 112.

The ground station 112 includes an antenna system 118 and a data processing device 120. The ground station 112 communicates with the spacecraft 106 via the antenna system 118. The ground terminal 112 receives an output of the RSO characterization application from the spacecraft.

The data processing device 120 of the ground station 112 processes data received from the data sources 106.

The data processing device 120 may be configured to store and format received output data of the OBP unit 108.

The ground segment 104 further includes a user device 128. The user device 128 is configured to receive input from a user and display data generated by the OBP 108 and the data processing device 120. The user device 128 is configured to display a graphical user interface that allows a user to interact with the data generated by the OBP 108 and the data processing device 120. The user interface may include a series of user interface screens for receiving user input and display output data generated by the data processing device 120.

The user device 128 and the data processing device 120 communicate via a network 130. The network 130 may be a wide area network, such as the Internet. Communication in this context may include sending and receiving data.

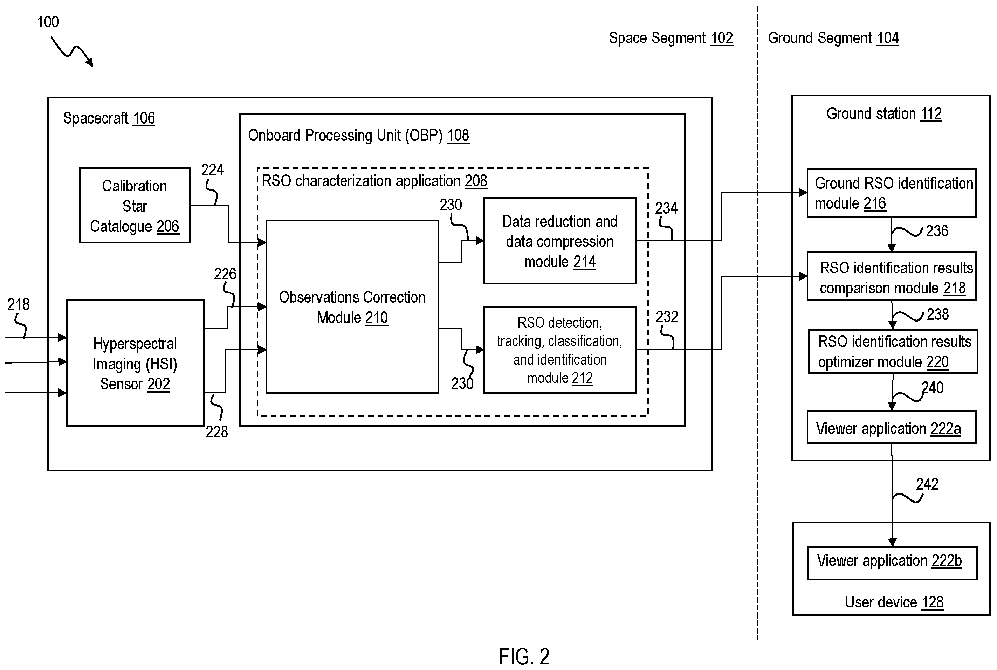

Referring now to Figure 2, shown therein are components of the system 100 of Figure 1 in further detail, according to an embodiment.

Spacecraft 106 includes onboard processing unit (OBP) 108. OBP 108 executes an RSO characterization software application 208. The RSO characterization application 208 receives hyperspectral data as input and generates RSO characterization data as output. The RSO characterization data includes detected and identified RSOs from the hyperspectral data.

The RSO characterization application 208 includes an observations correction module 210, an AI-based RSO detection, tracking, classification, and identification module 212, and a data reduction and data compression module 214.

Spacecraft 106 also includes a hyperspectral imaging sensor 202 and a calibration star catalogue 202.

The hyperspectral imaging sensor 202 collects hyperspectral data 218 in its field of view or environment. Collected hyperspectral data 218 includes measured spectra of reference stars 226 and measured spectra of RSO targets 228, as described below. Measured spectra of reference stars 226 may also be referred to as calibration data 226 or measured reference star spectra 226. Measured spectra of RSO targets 228 may also be referred to as RSO data 228.

The calibration star catalogue 206 is a catalogue or database of stars of a-priori known spectral characteristics (e.g., the Hipparcos catalogue) stored in one or more data storage devices in communication with the OBP 108. These a-priori known spectral characteristics may be referred to as a reference star calibration spectra 224 of the reference star.

The reference spectra 224 is provided as input to the observations correction module 210 of the OBP 108.

Stars selected from the calibration star catalogue 206 also have their spectral data collected periodically by hyperspectral imaging sensor 202. This collected spectral data may be referred to as reference star measured spectra 226 or calibration data 226 of the reference star. The measured spectra 226 includes measured spectral cube data for the respective reference stars.

The measured reference star spectra 226 is provided as input to the observations correction module 210.

The observations correction module 210 compares the received reference star measured spectra 226 against the reference star calibration spectra 224 to check the spectral response of the HSI sensor 202. Comparison of the measured dark field and reference star spectra with the a-priori known dark field and reference star spectra allows computation of gain and offset values for each spectral band (e.g. using the Empirical Line Method). These gain and offset values can then be applied to measured RSO spectral bands to effect corrections.

The output of the comparison by the observations corrections module 210 is corrections data.

Once the comparison is done and corrections data obtained, any required corrections to the spectral response of the instrument 202 can be updated using the corrections data before spectral measurements are taken from RSO targets by the HSI sensor 202. Corrections to the measured RSO spectra 228 may be applied in the Observations Correction Module 210.

Once the spectral response of the HSI sensor 202 has been calibrated using the reference star calibration spectra 224 and reference star measured spectra 226, the HSI sensor 202 collects hyperspectral data of RSO targets (measured RSO target spectra 228). The measured RSO target spectra 228 includes measured spectral cube data for RSO targets.

The measured RSO spectral data 228 is provided as input to the observations correction module 210.

The observations correction module 210 applies various corrections to the measured RSO spectral data 228 derived from the various sources including "flat" images / cubes, a-priori known solar irradiance, and the corrections for instrument response. Flats are used to ensure that the pixel responses are similar across the entire field of view (FoV). The solar irradiance correction is used to compensate for the known variation in illumination of the RSOs as a function of wavelength. Corrections for instrument response compensate for differences in detector sensitivity as a function of wavelength. The aim is that the corrected measured spectra should more clearly show the impact of the reflectance of the materials making up the RSOs once all the other factors are compensated for.

The observations correction module 210 outputs corrected measured RSO spectral data 230.

The corrected measured RSO spectral data 230 is provided as input to the RSO detection, tracking, classification, and identification module 212 and to the data reduction and data compression module 214.

The RSO detection, tracking, classification, and identification module 212 receives the corrected measured RSO spectral data as input and generates RSO and component identification data 232 as output. The RSO and component identification data 232 may be referred to as onboard RSO and component identification data 232 given it is generated onboard the spacecraft and to contrast with RSO and component identification data that may be generated on ground at a ground station (e.g., data 236, described below). The RSO and component identification data 232 classifies and identifies RSOs and component spectra in the corrected measured RSO data 230 to enable executing a trained machine learning (ML) model.

Where detection is poor, e.g., because of low signal to noise from a particular spectral band, the performance of the detection, tracking, classification, and identification module 212 may advantageously be improved by causing the spacecraft 106 to move as the RSO moves, thereby integrating the RSO returns and gaining higher signal o noise. Moreover, in addition to integrating the signal, the spectral return from an RSO from some bands may have limited returns while the spectral return from an RSO from other bands may have stronger returns, and so selecting the right spectral band may advantageously improve detection performance.

The RSO detection, tracking, classification, and identification module 212 uses at least one machine learning (ML) model to detect and track the RSO, thereby generating RSO and component identification data 232. The RSO detection, tracking, classification, and identification module 212 allows prolong RSO observation to improve detection, classification and identification performances. The at least one ML model is a trained supervised learning model. The supervised learning model may be a convolutional neural network (CNN), a multilayer perceptron (MLP), a transformer, an autoencoder, or any other model with learnable parameters. The at least one model may include a public, off-the-shelf architecture, which may be customized by adding or removing parameters, or may be an entirely new custom design.

The ground station 110 generates and sends new ML parameters to improve accuracy and performance of the on-board ML models.

The at least one ML model is configured to perform detection, tracking, classification, and identification tasks on the corrected measured RSO spectral data 230. The detection, tracking, classification, and identification tasks may be performed by a single ML model or across multiple models (e.g., a tracking model, a detection model, a classification model, an identification model).

The detection task includes detecting and localizing RSOs in the hyperspectral data 230. Localizing may include detecting an RSO in the hyperspectral data 230 and determining coordinates of a bounding box that encloses the detected RSO. The detection task includes detecting and localizing RSOs and non-RSOs ("other") in the hyperspectral data 230. Localizing may include detecting an RSO or other non-RSOs in the hyperspectral data 230 and determining coordinates of a bounding box that encloses the detection (a detected RSO and a detected non-RSO may each be referred to as a "detected object").

The tracking task may include an initial orbit determination augmented with any of the following filters: Extended Kalman Filter, Particle Filter, Recurrent Neural Network or a Long Short-Term Memory network. The tracking performance may be based on mean square error or mean absolute error. In an embodiment, the ground processing sends new parameters to improve tracking accuracy and performance.

The classification task includes assigning a class label to the detected RSOs and non-RSOs from a predefined taxonomy (e.g., a predefined list of class labels). Examples of RSO class labels may include "satellite - new", "satellite - old", "satellite - stable", "satellite - tumbling", "rocket body", and "debris". Examples of non-RSO class labels may include stars, environmental effects, and detector artefacts. Environmental effects may include, for example, radiation streaks. Detector artefacts may include, for example, dead pixels, stuck pixels, noise clusters, and banding.

The identification task includes generating an abundance map in which the spectrum of the detected RSOs is decomposed into individual component spectra. In some embodiments, the abundance map may be the final output of the identification task. In an embodiment, the abundance map provides a relative amount of materials present with material labels assigned (based on the various individual component spectra).

Accordingly, the RSO and component identification data 232 includes localization data (e.g., bounding box coordinates), class labels, and abundance maps of the RSOs detected in the hyperspectral data 230.

The at least one ML model is trained using a supervised learning approach. This may include an optimization process that adjusts the learnable parameters of the model or models using algorithms like backpropagation. The goal is to minimize a cost function that measures the difference between the predicted outputs and the ground truth labels. The ground truth labels can be derived from both simulated and real data and include the coordinates (e.g., bounding boxes), class labels, and abundance maps of the RSOs in the image data.

In an embodiment, the at least one ML model is trained end-to-end to simultaneously predict the location, class label, and abundance maps from the hyperspectral data. In another embodiment, a plurality of ML models may be trained separately for each individual task (detection, tracking, classification, and identification), resulting in distinct models for each task. In an embodiment, the hyperspectral data first goes through the detection model to localize the object (i.e., bounding box), a cropped region around each detected object is then passed to the tracking model if enabled for prolonged observation. Additionally, the data is passed to each of the classification model and identification model (i.e., separately).

In an embodiment, the input to the detection model is a tensor in R^3(W x H x Lambda) where W, H are the width and height of the hyperspectral cube or broadband data, and Lambda is the spectral bands. The detection model generates a detection output comprising a vector in R^4 [x_i, y_i, w_i, h_i] for each of the i-th detected object representing a bounding box. x_i and y_i may be the center or corner of the bounding box, w_i, h_i are the width and height of the bounding box. A segmentation map for the i-th detection can also be the output from which a corresponding bounding box can be obtained by getting the min and max x,y of the segmented object. The classification model generates a classification output comprising a vector in R^m for each of the detected objects, where m is the number of predefined object classes, e.g., m=5, [0.9, 0.05, 0.03, 0.02, 0] representing the class probability for each of the m classes. The output may also be logits which can easily be converted to probabilities using the softmax function. The identification model generates an identification output comprising a tensor in R^3(P x Q x N) for each detection, where P and Q are the width and height of the cropped region around each detected object. They can be different sizes for different detections, and it is not a requirement that they are the same size. P and Q could also be larger than the width and height of the bounding box. N is the number of end members (materials). The tensor represents the amount of each material at a given pixel location.

In some embodiments, the data reduction and data compression module 214 may be configured to perform lossy compression of the raw hyperspectral data and/or the corrected measured RSO spectral data 230 to achieve higher compression than lossless methods. The model may be trained using any suitable architecture, such as autoencoders or generative adversarial networks (GANs). Training approaches using self-supervised learning may be used to data filter and compress the input hyperspectral data and optimize for the reconstruction of the compressed input, effectively using the hyperspectral data as the ground truth.

The corrected measured RSO spectral data 230 is provided as input to the trained model. The trained model generates onboard RSO and component identification data 232 which detects (localizes) and classifies RSOs and identifies component spectra in the corrected measured RSO data 230. A component spectrum is the spectrum of an individual material. By decomposing the RSO spectrum to individual components, information on the materials making up the RSOs (e.g. type of solar cells) can be obtained. In addition, identifying component spectra of the RSO may yield the individual abundance of each type of material (e.g., as an abundance map) and so provide a "fingerprint" for each particular RSO. The term "onboard" in this context refers to the fact that the RSO and component identification data is generated onboard the spacecraft using the OBP 108 (which is in contrast to processing done at the ground station).

The trained model may be a classification model configured to identify RSOs or component spectra in the hyperspectral data and assign a class label to the identified object.

In an embodiment, the onboard RSO and component identification data 232 include a list of identified RSOs or component spectra in the hyperspectral data and associated metadata. The associated metadata may include, for example, location data locating the object in the image (e.g., bounding box coordinates), a class label, confidence level, or the like. In some cases, the onboard RSO and component identification data 232 includes a version of the hyperspectral image that is annotated with the associated metadata. The onboard RSO and component identification data 232 may also be referred to as onboard results data 232.

The onboard RSO and component identification data 232 is provided to the ground station 112.

The data reduction and data compression module 214 reduces the amount of spectral data by filtering and triaging the relevant data and compresses the corrected measured RSO data 230 according to one or more data compression techniques or algorithms. The one or more data compression techniques or algorithms may include lossless off-the-shelf image compression techniques, such as Lempel-Ziv-Welch (LZW) or the like. The data reduction and data compression module 214 reduces the volume of the corrected measured RSO data 230 prior to transmission to the ground station 112 to ensure that the available bandwidth is sufficient for downloading of the measured RSO data cubes. The output of the data reduction and data compression module 214 is compressed corrected measured RSO data 234.

The onboard RSO and component identification data 232 and the compressed corrected measured RSO data 234 are transmitted to the ground station 112 for further processing, as described below.

The ground station 112 executes a ground RSO identification module 216, an RSO identification results comparison module 218, an RSO identification results optimizer module 220, and a server-side viewer application component 222a.

The ground RSO identification module 216 processes the compressed corrected measured RSO data 234 using algorithms or techniques other than those used by the onboard RSO detection, tracking, classification, and identification module 212 to obtain ground RSO classification and identification data (where "ground" refers to the fact that the RSO classification and identification data is generated on the ground (ground segment), as opposed to onboard the spacecraft/in the space segment). The ground RSO identification module 216 may use other sensor sources from other (ground or space) sensors and their pattern of life and applying sensor fusion, advanced image processing algorithms, and deep learning such as convolutional neural networks and recurrent neural networks to analyze large datasets to improve or to optimize the RSO classification and identification accuracy. Generally, the computing system in the ground segment comprises significantly enhanced computational capacity compared to the space segment (i.e., onboard the spacecraft). Therefore, the ground segment computing systems can use more computationally demanding algorithms and techniques and significantly larger and more complex AI/ML models. The outputs can therefore be expected to more accurately characterize the RSOs and their various components.

In an embodiment, the design is intended to be flexible, where if there is sufficient downlink capacity the corrected hyperspectral data 230 or 234 be downlinked for processing. If there is not, then the on-board processing enables downlink of RSO information 232 extracted from the corrected hyperspectral data 230. However, in some embodiments, the ground station 112 may be able to compare extracted RSO information 232 from multiple Space Based Observations (SBOs) and/or Ground Based Observations (GBO) and hence may be able to better characterize the observed RSO on that basis.

With on-board processing, there is also the possibility to automatically track the target of interest and dynamically schedule additional data collections immediately in cases where anomalous results are obtained (e.g., in the RSO information 232). Such an anomalous result could indicate, for example, that the RSO is in the process of executing a maneuver (e.g., by detection of a rocket exhaust plume spectrum) and so requires further observations to keep track of the changing orbit.

The RSO identification results comparison module 218 receives the onboard RSO identification data 232 and the ground RSO identification data 236 as input and compares the two sets of RSO identification results to obtain comparison output data 238. The comparison of the onboard RSO identification data 232 and the ground RSO identification data 236 is used to identify any discrepancies and areas of improvement. Such comparison is further used to adjust any parameters to the on-board ML models via the ground to spacecraft uplink 114, to learn from mistakes and improve performance.

The RSO identification optimizer module 220 is configured to receive the comparison output data 238 as input and optimize the identification of RSOs and components. The optimized RSO and component identification results 242 are stored in memory of the ground station 112 and used by the viewer application 222a.

Viewer application 222a is configured to communicate with client-side viewer application 222b executing at user device 128. Viewer applications 222a, 222b may be collectively referred to as viewer application 222.

Generally, in response to a user input at the user device 128, the viewer application 222b generates a request for optimized RSO and component identification results and sends the request to the viewer application 222a at ground station 112.

The viewer application 222a may retrieve the optimized RSO and component identification data from memory or other data storage and send the optimized RSO and component identification data to the viewer application 222b. The viewer application 222b displays the received optimized RSO and component identification results 242 in a graphical user interface.

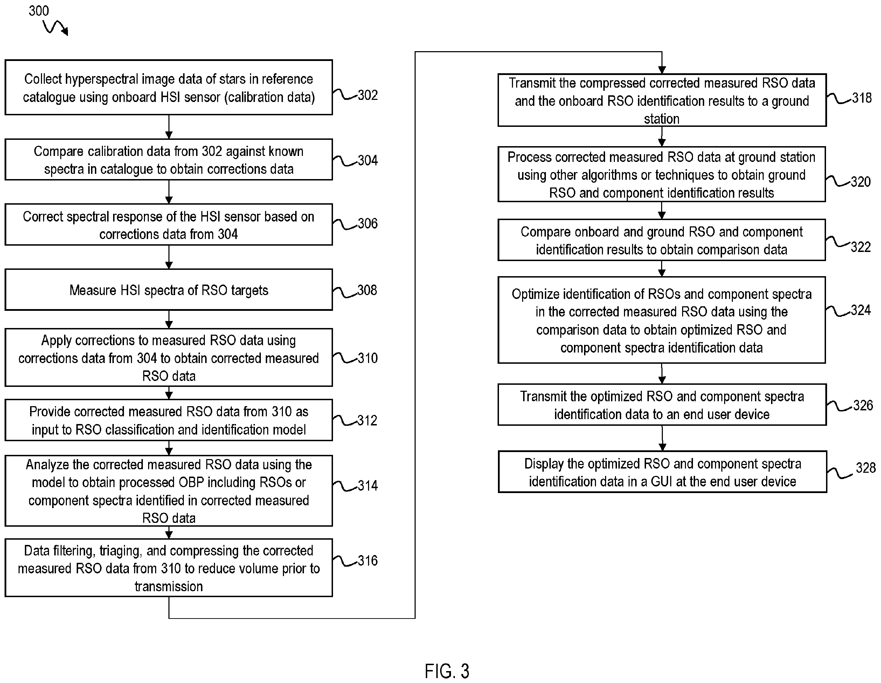

Referring now to Figure 3, shown therein is a method 300 of resident space object characterization, according to an embodiment. The method 300 may be implemented by the system 100 of Figures 1 and 2. One or more steps of method 300 may be encoded as computer-executable instructions which, when executed by one or more processors, cause the computer system to perform such steps.

At 302, the method 300 includes collecting hyperspectral data of stars in a calibration star catalogue using an onboard HSI sensor on a spacecraft. The collected hyperspectral data may be referred to as measured spectra or calibration data.

At 304, the method 300 includes comparing the calibration data against known spectra in calibration star reference catalogue to obtain corrections data.

At 306, the method 300 includes correcting a spectral response of the HSI sensor 202 based on the corrections data from 304.

At 308, the method 300 includes measuring HSI spectra of one or more RSOs using the HSI sensor. The system does not necessarily know what the RSO targets are. For example, the RSOs may be known (i.e., targets of the imaging operation) or unknown (i.e., appear in the field of view of an untargeted imaging operation). In some embodiments, the system may be commanded, or cued by the on-board WFOV sensor or by collaborating satellite constellations, to collect the hyperspectral data around a pointing angle. Information on any RSO targets present in the resulting field of view (FoV) is then extracted from the hyperspectral imagery collected. In other embodiments, the system may be commanded to collect hyperspectral data for a particular RSO target. Information on the target RSO's orbit may then be extracted from a locally maintained database stored in a data storage device onboard the spacecraft and the pointing angle calculated from the positions of the HSI spacecraft and the target RSO. This pointing angle is then used to collect the imagery with the HSI sensor.

At 310, the method 300 includes applying corrections to the measured RSO data using the corrections data from 304 to obtain corrected measured RSO data.

At 312, the method 300 includes providing the corrected measured RSO data as input to an RSO classification and identification model.

At 314, the method 300 includes analyzing the corrected measured RSO data using the RSO classification and identification model to onboard RSO and component identification results including RSOs or component spectra identified in corrected measured RSO data.

At 316, the method 300 includes data filtering, triaging, and compressing the corrected measured RSO data to reduce volume prior to transmission.

At 318, the method 300 includes transmitting the compressed corrected measured RSO data and the onboard RSO and component identification results from spacecraft to a ground station.

At 320, the method 300 includes processing the corrected measured RSO data at the ground station using other algorithms or techniques to obtain ground RSO and component identification results and/or using other sensor sources from other (ground or space) sensors and their pattern of life and applying sensor fusion, advanced image processing algorithms, and deep learning such as convolutional neural networks and recurrent neural networks to analyze large datasets to improve or to optimize the RSO classification and identification accuracy.

Any discrepancies and areas of improvement are fed back via an uplink to the onboard ML to learn from its mistakes and improve its performance over time.

At 322, the method 300 includes comparing the onboard RSO and component identification results to the ground RSO and component identification results obtain comparison data. The comparison of the on-board RSO and component identification results and the ground RSO and component identification results is used to identify any discrepancies and areas of improvement. Such comparison is further used to adjust any parameters to the on-board ML models via the ground to spacecraft uplink 114 to learn from mistakes and improve performance.

At 324, the method 300 includes optimizing identification of RSOs and component spectra in the corrected measured RSO data using the comparison data to obtain optimized RSO and component spectra identification data. "Component spectra" are the spectra of individual materials or components making up the RSO. An RSO spectrum is the result of summing the abundance weighted individual spectra of its various components.

At 326, the method 300 includes transmitting the optimized RSO and component spectra identification data to an end user device 128.

At 328, the method 300 includes displaying the optimized RSO and component spectra identification data in a graphical user interface (GUI) at the end user device 128.

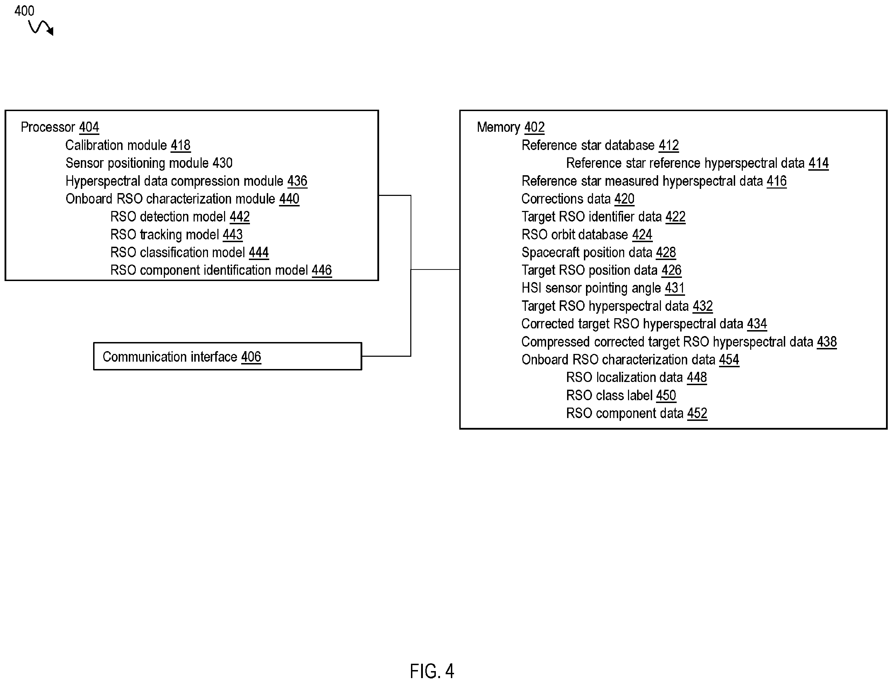

Referring now to Figure 4, shown therein is a computer system 400 for characterizing RSOs in hyperspectral data, according to an embodiment.

The system 400 may be configured to implement any one or more of the methods described herein or portions thereof.

Components of the computer system 400 may be implemented at one or more devices onboard a spacecraft, such as onboard processing unit 108 of Figures 1 and 2.

The system 400 includes a memory 402 and a processor 404 in communication with the memory 402.

The processor 404 is configured to execute various software modules and components.

The system 400 includes a communication interface device 406 for transmitting and receiving data to and from other computing devices, including collaborating and sharing RSO data, such as launch information and intelligence and space weather, with other space and ground sensor sources, a Hyperspectral Signature Body of Knowledge, Star Databases, and space asset operators (including end users such as satellite operators and Space Traffic Management Centers). The communication interface device 406 may include a network interface device for transmitting and receiving data via a network connection (e.g., local area network, wide area network, etc.). The network connection may be wired or wireless connection.

The memory 402 stores a reference star database 412. The reference star database 412 includes a-priori known spectral characteristics for a plurality of reference stars. The a-priori known spectral characteristics of a reference star are stored as reference star reference hyperspectral data 414.

The memory 402 also stores reference star measured hyperspectral data 416. The reference star measured hyperspectral data 416 is hyperspectral data collected by an onboard hyperspectral sensor (e.g., sensor 202) of one or more reference stars in the reference star database 412.

The processor 404 includes a calibration module 418. The calibration module 418 compares the reference star reference hyperspectral data 414 and the reference star measured hyperspectral data 416 and determines corrections data 420. The corrections data 420 includes one or more corrections to be applied to the spectral response of the onboard hyperspectral imaging sensor. In an embodiment, the corrections data 420 is applied to the collected raw hyperspectral data.

The memory 402 also stores a target RSO identifier data 422. The target RSO identifier data 422 identifies a particular target RSO that is to be imaged and characterized by the system 400. The RSO identifier data 422 may be provided to the system 400 by a user. For example, a user interacting with a user interface on a user device in the ground segment may input data identifying a target RSO.

The memory 402 also stores an RSO orbit database 424. The RSO orbit database 424 stores information on the orbit of the target RSO from the target RSO identifier data 422. The RSO orbit database 424 may stores information on the orbits of a plurality of RSOs. The orbit information is retrievable from the database 424 using the target RSO identifier data 422. The orbit information of the target RSO is used to determine or obtain target RSO position data 426 of the target RSO. The target RSO position data 426 is stored in memory 402. The target RSO position data 426 is used to update the RSO orbit parameter accuracy.

The memory 402 also stores spacecraft position data 428. The spacecraft position data 428 provides information about the position of the spacecraft. The spacecraft position data 428 may be obtained from a positioning system of the spacecraft, including external (joint space operations center (JSPoC)) and internal ground (satellite operation infrastructure) and spacecraft tracking systems that maintain up-to-date data of the spacecraft attitude control system and orbit position.

The processor 404 includes a sensor positioning module 430. The sensor positioning module 430 receives the target RSO position data 426 and the spacecraft position data 428, including spacecraft altitude, as input and determines a hyperspectral sensor pointing angle 431. The pointing angle 431 is output, for example via communication interface 406, to the hyperspectral sensor as part of a command to collect hyperspectral data. Given the inputs 426, 428, the collection of hyperspectral data at the pointing angle 431 should capture the target RSO. If no RSO target is found, the satellite may autonomously search in the area of interest to find the target or if the spacecraft has an onboard wide area field of view optical sensor, such sensor may assist in locating the RSO that may be maneuvering.

The hyperspectral sensor collects hyperspectral data at the pointing angle 431, which is stored in memory 402 as target RSO hyperspectral data 432.

The calibration module 418 applies the corrections data 420 to the target RSO hyperspectral data 432 to obtain corrected target RSO hyperspectral data 434. The corrected target RSO hyperspectral data 434 is stored in memory 402.

The corrected target RSO hyperspectral data 434 is provided as input to a hyperspectral data compression module 436. The hyperspectral data compression module 436 compresses the corrected target RSO hyperspectral data 434 to obtain compressed corrected target RSO hyperspectral data 438. compressed corrected target RSO hyperspectral data 438 is stored in memory 402.

The compressed corrected target RSO hyperspectral data 438 is sent via the communication interface to a transmitting device onboard the spacecraft that is configured to transmit data from spacecraft to the ground segment. The compressed corrected target RSO hyperspectral data 438 is sent from the spacecraft to the ground segment for processing by a ground station or terminal computing device.

The processor 404 also includes an onboard RSO characterization module 440 that uses machine learning techniques to detect and characterize RSOs in hyperspectral data.

The onboard RSO characterization module 440 includes an RSO detection model 442, an RSO tracking model 443, an RSO classification model 444, and an RSO component identification model 446. The models 442, 443, 444, 446 may be machine learning models trained using supervised learning using other sensor sources from other (ground or space) sensors and their pattern of life and applying sensor fusion and advanced image processing algorithms for higher classification and identification performance accuracy. For example, the models 442, 443, 444, 446 may include convolutional neural networks, multilayer perceptrons, transformers, autoencoders, or other models with learnable parameters. While Figure 4 shows the models 442, 443, 444, 446 as separate models (i.e., trained separately for each individual task), in other embodiments, two or all of the models may be trained end-to end to simultaneously perform detection, tracking, classification, and identification tasks (e.g., as one model that performs two or more tasks).

The onboard RSO characterization module 440 receives the corrected target RSO hyperspectral data 432 as input.

The onboard RSO characterization module 440 provides the corrected target RSO hyperspectral data 432 to the RSO detection model 442. The RSO detection model 442 is configured to detect and localize RSOs in hyperspectral data. The RSO detection model 442 detects the target RSO in the corrected target RSO hyperspectral data 432 and outputs RSO localization data. The localization data 448 localizes the detected target RSO in the corrected target RSO hyperspectral data 432. In an embodiment, the RSO localization data includes bounding box coordinates defining a bounding box which encloses the detected target RSO.

The onboard RSO characterization module 440 provide continuous correct hyperspectral sensor positioning. The RSO tracking model 443 is configure to position the hyperspectral camera to follow the RSO track.

The onboard RSO characterization module 440 provides the corrected target RSO hyperspectral data 432 to the RSO classification model 444. The RSO classification model 444 is configured to assign a class label 450 from a pre-defined set of class labels to the detected target RSO.

In some embodiments, the output of the RSO detection model 442 may be used to crop a portion of the corrected target RSO hyperspectral data 438 that contains the detected target RSO (e.g., using the localization data 448). The cropped hyperspectral data may then be provided to the RSO classification model 444 and the RSO classification model performs the classification task on the cropped image.

The onboard RSO characterization module 440 provides the corrected target RSO hyperspectral data 432 to the RSO component identification model 446. The RSO component identification model 446 is configured to decompose the spectrum of the detected target RSO into individual component spectra. In doing so, the RSO component identification model 446 generates RSO component data, which provides information about the components of the detected RSO. In an embodiment, the RSO component data 452 includes an abundance map 452 indicating the abundance of the components making up the detected RSO. In some cases, the RSO component identification model 446 may assign a material label to an identified RSO component indicating the type of material.

The RSO localization data 448, RSO class label 450, and RSO component data 452 may be collectively referred to and stored in memory 402 as onboard RSO characterization data 454.

It should be noted that the above discussion of Figure 4 refers to detection, tracking, classification, and identification of a single target RSO for simplicity and the system 400 may be used to characterize multiple target RSOs (whether known, as in identified as a target prior to data collection, or unknown, as in being first identified in the collected hyperspectral data).

Similarly, the above discussion of Figure 4 refers to a target RSO. It should be noted that, in some embodiments, a target RSO or target RSOs may not be provided to the system 400. Instead, hyperspectral data may be collected around a pointing angle of the hyperspectral sensor without regard to a specific RSO and information about RSOs that are within the FOV of the sensor is extracted from the hyperspectral imagery.

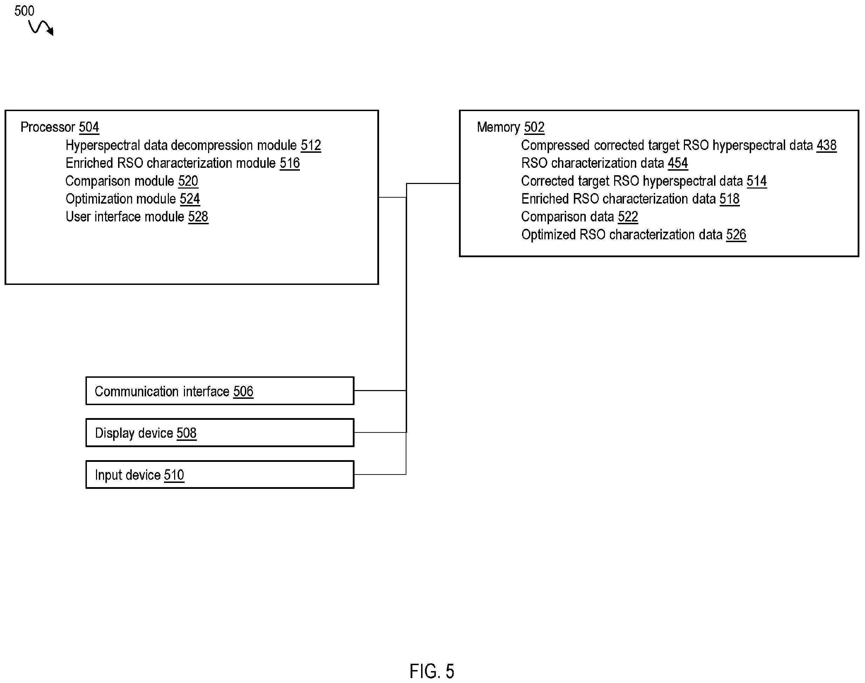

Referring now to Figure 5, shown therein is a computer system 500 for characterizing RSOs in hyperspectral data, according to an embodiment.

The system 500 may be configured to implement any one or more of the methods described herein, or portions thereof.

Components of the computer system 500 may be implemented at one or more devices, such as server system 120 and user device 128 of Figure 1.

The system 500 includes a memory 502 and a processor 504 in communication with the memory 502.

The processor 504 is configured to execute various software modules and components. In some embodiments, modules or components executed by the processor 504 may include server-side software components and client-side software components that communicate with each other in order to provide various features and functionalities of the system 500. In some cases, server-side components may be executed at a server computer and client-side components may be executed at a user device. The user device may be used in satellite owner operations or space operation centers (e.g., Joint Space Operations Center (JSpOC), Combined Space Operations Center (CSpOC), Joint Interagency Combined Space Operations Center (JICSpOC), National Space Defense Center (NSDC), Missile Warning Center (MWC), Joint Navigation Warfare Center (JNWC), European Space Operations Centre (ESOC), Commandement de I'Espace (CDE), German Space Situational Awareness Centre (GSSAC), United Kingdom Space Operations Center (UKSpOC), Italian Space Surveillance and Tracking Operation Center (ISOC)).

The system 500 includes a communication interface device 506 for transmitting and receiving data to and from other computing devices including collaborating and sharing RSO data, such as launch information and intelligence and space weather, with other space and ground sensor sources, a Hyperspectral Signature Body of Knowledge, Star Databases, and space asset operators (including end users such as satellite operators and Space Traffic Management Centers). The communication interface device 506 may include a network interface device for transmitting and receiving data via a network connection (e.g., local area network, wide area network, etc.).

The system 500 includes a display device 508 for displaying data generated by the system 500. The display device 508 may be located at a user device, such as user device 128 of Figure 1.

The system 500 includes an input device 510 for receiving input data from a user interacting with the system 500. For example, a user may use input device 510 to interact with the system 500 through a graphical user interface generated by the processor 604 and displayed via the display device 508. The input device 510 may be located at the user device, such as user device 128 of Figure 1. A user may input information requests about RSO characterization through the input device 510 (e.g., provide target RSO identification information or two-line-element parameters).

The computer system 500 receives compressed corrected target RSO hyperspectral data 438 and the onboard RSO characterization data 454 via communication interface 506. The compressed corrected target RSO hyperspectral data 438 and the onboard RSO characterization data 454 are stored in memory 502.

The processor 504 includes a hyperspectral data decompression module 512. The hyperspectral data decompression module 504 decompresses the compressed corrected target RSO hyperspectral data 438 to obtain corrected target RSO hyperspectral data 514.

The corrected target RSO hyperspectral data 438 is provided to an enriched RSO characterization module 516 configured to detect and classify RSOs in hyperspectral data and identify RSO components. The enriched RSO characterization module 516 may use one or more machine learning models, trained from past HSI collections and other (ground or space) sensors and their pattern of life including sensor fusion, and advanced image processing algorithms, to obtain enriched RSO characterization data 518. The enriched RSO characterization data 518 may localize the target RSO in the hyperspectral data, assign a class label to the detected RSO, and identify components of the detected RSO. Generally, the enriched RSO characterization module 516 uses detection, classification, and component identification techniques that are more computationally intensive than those used by the onboard RSO characterization module 440 of Figure 4, which is implemented onboard the spacecraft. Accordingly, where the enriched RSO characterization module 516 uses one or more machine learning models, the models may be larger and/or more complex than the models used by the onboard RSO characterization module 440.

The processor 504 includes a comparison module 520 for comparing the onboard and enriched RSO characterization data 454, 518. The comparison module 520 generates comparison data 522 indicating results of the comparison.

The processor 504 includes an optimization module 524. The optimization module 524 receives the comparison data 522 as input and generates optimized RSO characterization data 526. Optimization may be carried out for downlinked data from multiple SBOs. Comparison of downlinked data from multiple SBOs for the same target RSO may result in a better characterization and pattern of life of the various components. Also, triangulation of the observation angle data for the same RSO from multiple different SBOs (or other sensors) can result in very much more rapid and precise RSO position and orbit estimation. The optimized RSO characterization data 526 may detect/localize, classify, and identify components (or material composition) of the target RSO. In an embodiment, the optimized RSO characterization data 526 is an optimized version of the onboard RSO characterization data 454. The optimized RSO characterization data 526 is stored in memory 502.

The comparison data 522 of the on-board and enriched (ground) RSO characterization data 454, 518 is used to identify any discrepancies and areas of improvement that may be used to adjust any parameters to the on-board ML models 442, 443, 444, 446 via the ground-to-spacecraft uplink 114 by learning from mistakes and improving performance. The update of the RSO orbit database 424 improves the estimate of the next observation position and characterizes whether the target RSO is maneuvering.

The processor 504 also includes a user interface module 528. The user interface module 528 generates a user interface for displaying one or more types of data stored in the memory 502. For example, the user interface module 528 may display the optimized RSO characterization data 526 in a user interface. In an embodiment, the user interface module 528 may display an annotated version of the hyperspectral data, for example including localization, class label, and component identification information.

As noted in respect of Figure 4, it should be noted that while Figure 5 refers to a single target RSO, as with Figure 4, the system 500 may be used to characterize multiple target RSOs (whether known, as in identified as a target prior to data collection, or unknown, as in being first identified in the collected hyperspectral data).

While the above description provides examples of one or more apparatus, methods, or systems, it will be appreciated that other apparatus, methods, or systems may be within the scope of the claims as interpreted by one of skill in the art.

## Claims

1. A method of characterizing resident space objects (RSOs) for space situational awareness using hyperspectral imaging, the method comprising:
collecting hyperspectral data of an RSO using a hyperspectral imaging sensor onboard a spacecraft while in space;
processing the hyperspectral data using a machine learning-based RSO classification and identification model running on a processing unit onboard the spacecraft to obtain RSO and component spectra identification data;
transmitting the RSO and component spectra identification data from the spacecraft to a ground station;
transmitting the measured hyperspectral data of the RSO from the spacecraft to the ground station;
processing the measured hyperspectral data of the RSO by a processing unit at the ground station using an image processing algorithm or technique other than the ML-based RSO classification and identification model to obtain enriched RSO and component spectra identification data;
optimizing identification of the RSO and component spectra in the measured hyperspectral data using an output of a comparison of the RSO and component spectra identification data and the enriched RSO and component spectra identification data to obtain optimized RSO and component spectra identification data;
transmitting the optimized RSO and component spectra identification data to a user device; and
displaying the optimized RSO and component spectra identification data in a graphical user interface at the user device.

2. The method of claim 1, wherein the image processing algorithm or technique is trained from past HSI collections or trained from other sensors and patterns of life of the other sensors.

3. The method of claim 2, wherein a sensor fusion technique is applied to the other sensors and the patterns of life of the other sensors, and wherein an output of the sensor fusion technique is used to train the image processing algorithm or technique.

4. The method of claim 1 further comprising updating the machine learning-based RSO classification and identification model using the optimized RSO and component spectra identification data, including parameter adjustment or estimation, or uplinking an updated machine learning-based RSO classification and identification model or updated model parameters to the spacecraft.

5. The method of claim 1, further comprising:
performing, before measuring the hyperspectral data of the RSO:
storing calibration hyperspectral data of reference stars on a data storage device onboard the spacecraft;
collecting hyperspectral data of the reference stars using the hyperspectral imaging sensor while in space;
comparing the collected hyperspectral data of the reference stars to the calibration hyperspectral data of the reference stars using the processing unit onboard the spacecraft to obtain corrections data; and
correcting a spectral response of the hyperspectral imaging sensor based on the corrections data.

6. The method of claim 1, further comprising reducing and compressing the collected hyperspectral data of the RSO prior to transmitting to the ground station and decompressing the compressed collected hyperspectral data of the RSO prior to processing by the processing unit at the ground station.

7. The method of claim 5, wherein the calibration hyperspectral data comprises a catalogue or database of stars of a-priori known spectral characteristics stored on a data storage devices in communication with the processing unit onboard the spacecraft.

8. The method of claim 7, wherein comparing the collected hyperspectral data of the reference stars to the calibration hyperspectral data of the reference stars includes:
comparing measured dark field and reference star spectra with the a-priori known dark field and reference star spectra;
computing gain and offset values for each spectral band using the output of the comparison; and
applying the gain and offset values to measured RSO spectral bands to effect corrections;
wherein the computing is done using the Empirical Line Method.

9. The method of claim 5, wherein the corrections data includes:
correction for solar irradiance to compensate for known variation in illumination of the RSO as a function of wavelength; and
correction for instrument response to compensate for differences in detector sensitivity as a function of wavelength;
wherein application of the corrections data compensates for other factors such that the corrected hyperspectral data more clearly shows impact of reflectance of materials making up the RSO.

10. The method of claim 1, wherein the component spectra include spectra of individual materials making up the RSO, wherein the component spectra includes an individual abundance of each type of material in the RSO and acts as a fingerprint for the RSO, and wherein the RSO spectrum equals a sum of abundance weighted individual spectra of the individual materials.

11. The method of claim 1, wherein the RSO is not a known RSO target, wherein the hyperspectral imaging sensor is commanded to collect the hyperspectral data around a pointing angle and the RSO is present in the resulting field of view of the hyperspectral imaging sensor, and wherein the command is received based on a task list from the ground station or cued by an on-board wide field-of-view sensor or by cooperative satellite constellations in proximity.

12. The method of claim 1, wherein the RSO is a known RSO target, and wherein the method further comprises:
extracting information on an orbit of the known RSO target from a locally maintained database stored on a data storage device onboard the spacecraft;
calculating a pointing angle from altitudes and positions of the spacecraft and the known RSO target; and
commanding the hyperspectral imaging sensor to collect the hyperspectral data around the pointing angle.

13. A system for characterizing resident space objects (RSOs) for space situational awareness using hyperspectral imaging, the system comprising:
a hyperspectral imaging sensor onboard a spacecraft for collecting hyperspectral data of an RSO while in space;
a processing unit onboard the spacecraft, configured to:
process the hyperspectral data using a machine learning-based RSO classification and identification model to obtain RSO and component spectra identification data;
a communication system onboard the spacecraft, configured to:
transmit the RSO and component spectra identification data from the spacecraft to a ground station;
transmit the measured hyperspectral data of the RSO from the spacecraft to the ground station;
the ground station, comprising:
a processing unit configured to:
process the measured hyperspectral data of the RSO using an image processing algorithm or technique other than the ML-based RSO classification and identification model to obtain enriched RSO and component spectra identification data;
optimize identification of the RSO and component spectra in the measured hyperspectral data using an output of a comparison of the RSO and component spectra identification data and the enriched RSO and component spectra identification data to obtain optimized RSO and component spectra identification data;
a communication interface configured to:
transmit the optimized RSO and component spectra identification data to a user device; and
the user device, configured to:
display the optimized RSO and component spectra identification data in a graphical user interface.

14. The system of claim 13, wherein the image processing algorithm or technique is trained from past HSI collections or trained from other sensors and patterns of life of the other sensors, wherein a sensor fusion technique is applied to the other sensors and the patterns of life of the other sensors, and wherein an output of the sensor fusion technique is used to train the image processing algorithm or technique.

15. The system of claim 13 further comprising updating the machine learning-based RSO classification and identification model using the optimized RSO and component spectra identification data, including
parameter adjustment or estimation, or uplinking an updated machine learning-based RSO classification and identification model or updated model parameters to the spacecraft.
